(19) **Europäisches Patentamt / European Patent Office / Office européen des brevets**

(11) **EP 3 297 253 A1**

(12) **EUROPEAN PATENT APPLICATION**

(43) Date of publication:
**21.03.2018 Bulletin 2018/12**

(21) Application number: **17191644.8**

(22) Date of filing: **15.03.2016**

(51) Int Cl.:
*H04L 29/08* (2006.01)     *H04W 72/04* (2009.01)
*H04L 12/26* (2006.01)     *H04W 52/02* (2009.01)
*H04W 76/14* (2018.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **15.04.2015   US 201562148129 P**
**04.06.2015   US 201514730433**

(62) Document number(s) of the earlier application(s) in accordance with Art. 76 EPC:
**16712625.9 / 3 254 444**

(71) Applicant: **QUALCOMM Incorporated**
**San Diego, CA 92121-1714 (US)**

(72) Inventors:
• **VERMA, Lochan**
  **San Diego, CA 92121-1714 (US)**
• **AWONIYI-OTERI, Olufunmilola Omolade**
  **San Diego, CA 92121-1714 (US)**
• **RAVEENDRAN, Vijayalakshmi**
  **San Diego, CA 92121-1714 (US)**

(74) Representative: **Dunlop, Hugh Christopher et al**
**Maucher Jenkins**
**26 Caxton Street**
**London SW1H 0RJ (GB)**

Remarks:
This application was filed on 18-09-2017 as a divisional application to the application mentioned under INID code 62.

(54) **INTERFERENCE-AWARE GROUP OWNER, BANDWIDTH, AND CHANNEL SELECTION IN PEER-TO-PEER WIRELESS COMMUNICATION SYSTEMS**

(57)     Aspects of the present disclosure provide a method of wireless communication operable at a peer-to-peer (P2P) device, an apparatus, and a computer program product. A first P2P device determines a first interference margin report including a plurality of first interference margins. The first interference margins respectively correspond to a plurality of channels at a plurality of bandwidths. The first P2P device transmits the first interference margin report to a second P2P device. Prior to associating with the second P2P device to form a P2P group, the first P2P device selects at least one of a bandwidth, a channel, or a group owner of the P2P group based on the first interference margin report.

EP 3 297 253 A1

```
                    Start          500

502 — Determine a first interference margin report including a plurality of first
      interference margins, wherein the first interference margins respectively
      correspond to a plurality of channels at a plurality of bandwidths

504 — Transmits the first interference margin report to a second P2P device

506 — Prior to associating with the second P2P device to form a P2P group, select
      at least one of a bandwidth, a channel, or a group owner of the P2P group
      based on the first interference margin report

                    End
```

*FIG. 5*

**Description**

**CROSS-REFERENCE TO RELATED APPLICATIONS**

This application claims priority to and the benefit of Provisional Application No. 62/148,129 filed in the U.S. Patent and Trademark Office on April 15, 2015, and Non-Provisional Application No. 14/730,433 filed in the U.S. Patent and Trademark Office on June 4, 2015, the entire contents of which are incorporated herein by reference.

**TECHNICAL FIELD**

The technology discussed below relates generally to wireless communication systems, and more particularly, to peer-to-peer wireless communication systems.

**BACKGROUND**

Wireless communication networks are widely deployed to provide various communication services such as telephony, video, data, messaging, broadcasts, and so on. Such networks, which are usually multiple access networks, support communications for multiple users by sharing the available network resources. One example of such a network is a peer-to-peer (P2P) wireless communication network in which each device or peer of the P2P network can directly connect with other devices without an intervening wireless connecting apparatus. Examples of a wireless connecting apparatus are access points, access gateways, base stations, etc. A P2P network may also be referred to as an ad-hoc network. A P2P network is different from a network operating in an infrastructure mode in which one or more wireless connecting apparatuses (e.g., access points) provide connections to access terminals, user equipment, or mobile stations.
One particular example of a P2P network is WiFi-Direct. WiFi-Direct is a P2P technology that enables Wi-Fi devices to connect directly to each other without an access point. WiFi-Direct devices can make a one-to-one connection, or a group of several devices can connect to each other simultaneously. WiFi-Direct is supported by the WiFi Alliance Association, which publishes specifications for certifying WiFi-Direct products. More detail of the WiFi-Direct standard can be found for example in the Wi-Fi Peer-to-Peer (P2P) Technical Specification v1.5 and Wi-Fi Peer-to-Peer Services Technical Specification Package v1.1, both incorporated herein by reference.

**BRIEF SUMMARY OF SOME EXAMPLES**

The following presents a simplified summary of one or more aspects of the present disclosure, in order to provide a basic understanding of such aspects. This summary is not an extensive overview of all contemplated features of the disclosure, and is intended neither to identify key or critical elements of all aspects of the disclosure nor to delineate the scope of any or all aspects of the disclosure. Its sole purpose is to present some concepts of one or more aspects of the disclosure in a simplified form as a prelude to the more detailed description that is presented later.
Aspects of the present disclosure are directed to peer-to-peer wireless communication systems.
In one aspect, the disclosure provides a method of wireless communication operable at a first peer-to-peer (P2P) device. The first P2P device determines a first interference margin report including a plurality of first interference margins, wherein the first interference margins respectively correspond to a plurality of channels at a plurality of bandwidths. The first P2P device transmits the first interference margin report to a second P2P device; and prior to associating with the second P2P device to form a P2P group, the first P2P device selects at least one of a bandwidth, a channel, or a group owner of the P2P group based on the first interference margin report.
Another aspect of the disclosure provides a first peer-to-peer (P2P) device. The first P2P device includes means for determining a first interference margin report including a plurality of first interference margins, wherein the first interference margins respectively correspond to a plurality of channels at a plurality of bandwidths. The first P2P device further includes means for transmitting the first interference margin report to a second P2P device. The first P2P device further includes means for prior to associating with the second P2P device to form a P2P group, selecting at least one of a bandwidth, a channel, or a group owner of the P2P group based on the first interference margin report.
Another aspect of the disclosure provides a first peer-to-peer (P2P) device. The first P2P device includes a communication interface configured to transmit a first interference margin report to a second P2P device, a memory including software, and at least one processor operatively coupled to the communication interface and memory. The at least one processor when configured by the software, includes an interference margin measurement block configured to determine the first interference margin report including a plurality of first interference margins, wherein the first interference margins respectively correspond to a plurality of channels at a plurality of bandwidths. The at least one processor further includes a P2P group selection block configured to prior to associating with the second P2P device to form a P2P group, select at least one of a bandwidth, a channel, or a group owner of the P2P group based on the first interference margin report.

Another aspect of the disclosure provides a computer program product including a computer-readable medium that includes code for causing a first peer-to-peer (P2P) device to perform P2P communication. The code causes the first P2P device to determine a first interference margin report including a plurality of first interference margins, wherein the first interference margins respectively correspond to a plurality of channels at a plurality of bandwidths. The code further causes the first P2P device to transmit the first interference margin report to a second P2P device. The code further causes the first P2P device, prior to associating with the second P2P device to form a P2P group, to select at least one of a bandwidth, a channel, or a group owner of the P2P group based on the first interference margin report.

These and other aspects of the invention will become more fully understood upon a review of the detailed description, which follows. Other aspects, features, and embodiments of the present invention will become apparent to those of ordinary skill in the art, upon reviewing the following description of specific, exemplary embodiments of the present invention in conjunction with the accompanying figures. While features of the present invention may be discussed relative to certain embodiments and figures below, all embodiments of the present invention can include one or more of the advantageous features discussed herein. In other words, while one or more embodiments may be discussed as having certain advantageous features, one or more of such features may also be used in accordance with the various embodiments of the invention discussed herein. In similar fashion, while exemplary embodiments may be discussed below as device, system, or method embodiments it should be understood that such exemplary embodiments can be implemented in various devices, systems, and methods.

## BRIEF DESCRIPTION OF THE DRAWINGS

FIG. 1 is a diagram illustrating an example of a peer-to-peer (P2P) network in accordance with an aspect of the disclosure.

FIG. 2 is a diagram illustrating an example of a hardware implementation for an apparatus employing a processing system in accordance with an aspect of the disclosure.

FIG. 3 is a diagram illustrating different stages of communication between P2P devices in accordance with an aspect of the disclosure.

FIG. 4 is a block diagram illustrating a bandwidth and channel selection process in accordance with an aspect of the disclosure.

FIG. 5 is a flow chart illustrating a P2P group negotiation method utilizing the interference environment of P2P devices in accordance with some aspects of the disclosure.

FIG. 6 is a flow chart illustrating a bandwidth selection method in accordance with some aspects of the disclosure.

FIG. 7 is a profile chart illustrating the relationship between packet error rate (PER) and interference margin for various modulation schemes in accordance with an aspect of the disclosure.

FIG. 8 is a flow chart illustrating a channel selection method for reducing power consumption in accordance with an aspect of the disclosure.

FIG. 9 is a drawing illustrating an example of channel separation.

FIG. 10 is a flow chart illustrating a channel selection method for reducing interference in accordance with an aspect of the disclosure.

FIG. 11 is a drawing illustrating as an example of P2P channels and their respective interference margins.

FIG. 12 is a flow chart illustrating a P2P group owner selection method in accordance with some aspects of the disclosure.

FIG. 13 is a flow chart illustrating an intent value determination method in accordance with some aspects of the disclosure.

FIG. 14 is a flow chart illustrating a bandwidth selection method based on the relationship between the packet error rate (PER) for the modulation-code rate pair and the interference margin, in accordance with some aspects of the disclosure.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

Aspects of the present disclosure provide an apparatus and methods of operating the apparatus to perform peer-to-peer (P2P) communications. The methods may take interference measurements at the P2P devices into consideration in order to improve bandwidth and channel selection for P2P communication. The method also can consider interference measurements at the P2P devices in order to select a group owner (GO) of a P2P group. According to the aspects of the disclosure, the selected bandwidth, channel and group owner based on interference measurements, may improve the probability of error-free communication between the P2P peers and reduce power consumption and interference.

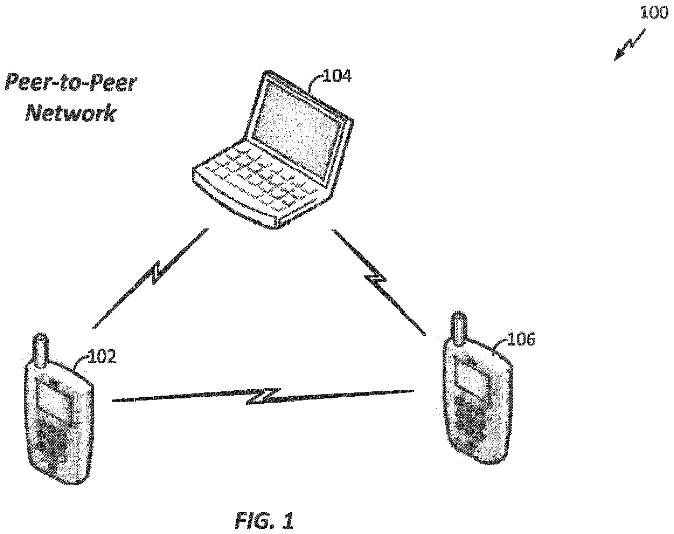

FIG. 1 is a diagram illustrating an example of a peer-to-peer (P2P) network 100 in accordance with an aspect of the disclosure. The P2P network 100 includes one or more P2P devices, for example P2P devices 102, 104 and 106. A P2P device (e.g., P2P devices 102, 104, and 106) may wirelessly communicate with one or more other P2P devices without a wireless connecting device such as an access point or base station. A P2P device may generally be referred to as a P2P peer or a P2P node. A P2P peer can simultaneously function as a client and a server to other peers. One example of a P2P network is WiFi-Direct. While some aspects of the present disclosure are illustrated by a WiFi-Direct network, the present disclosure is not so limited. The various aspects and concepts of the present disclosure can be applied to other suitable networks including non-P2P networks.

Before the P2P devices can form a P2P group or network, the P2P devices engage in a group negotiation procedure (or a handshake procedure). In aspects of the disclosure, the P2P devices perform the group negotiation procedure to select the communication bandwidth and channel(s), and determine the P2P device to be the group owner (GO). However, in the related art, the group negotiation procedure is used for GO selection, then the selected GO selects the channel of operation. The P2P device selected as the group owner acts as an access point or provides access point type functions for the other P2P peers belonging to the same P2P group. Non-limiting examples of a P2P device include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, an Internet-of-things device, a wearable computing device (e.g., a smartwatch, a health or fitness tracker, etc.), an appliance, a sensor, a vending machine, or any other similar functioning device.

In order to select the GO, the P2P devices may share or exchange a data field sometimes referred to as the "intent value." For example, the intent value may have a value of zero through fifteen, wherein a higher value indicates a greater desire or intent to be the GO relative to a lower value. Therefore, a higher intent value generally indicates a higher probability of being selected to be the GO.

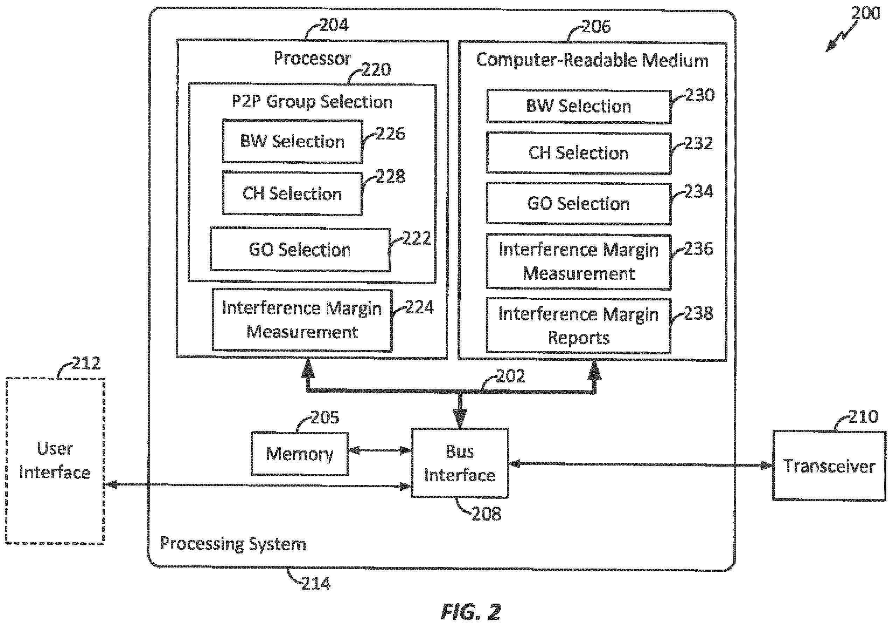

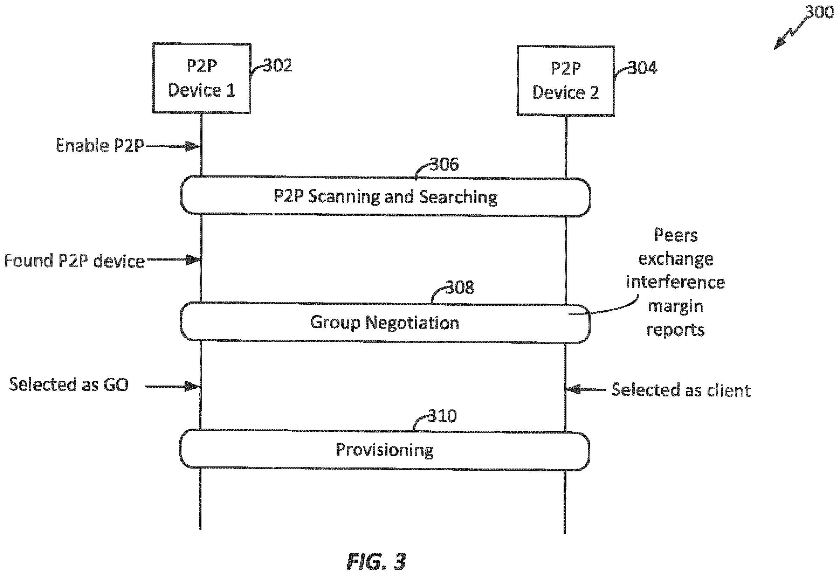

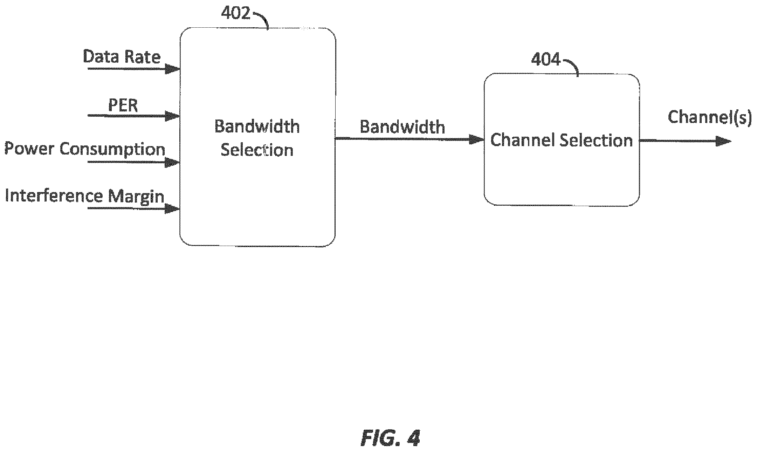

FIG. 2 is a block diagram illustrating an example of a hardware implementation for an apparatus 200 employing a processing system 214. In accordance with various aspects of the disclosure, an element, or any portion of an element, or any combination of elements may be implemented with a processing system 214 that includes one or more processors 204. For example, the apparatus 200 may be a P2P device as illustrated in any one or more of FIGs. 1 and/or 3. Examples of processors 204 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. That is, the processor 204, as utilized in an apparatus 200, may be used to implement any one or more of the processes described below and illustrated in FIGs. 4-13.

In this example, the processing system 214 may be implemented with a bus architecture, represented generally by the bus 202. The bus 202 may include any number of interconnecting buses and bridges depending on the specific application of the processing system 214 and the overall design constraints. The bus 202 links together various circuits including one or more processors (represented generally by the processor 204), a memory 205, and computer-readable media (represented generally by the computer-readable medium 206). The bus 202 may also link various other circuits such as timing sources, peripherals, voltage regulators, and power management circuits, which are well known in the art, and therefore, will not be described any further. A bus interface 208 provides an interface between the bus 202 and a transceiver 210. The transceiver 210 is a communication interface that provides a means for communicating with various other apparatuses over a transmission medium. For examples, the transceiver 210 may include one or more of transmitters configured to transmit wireless communication and one or more receivers configured to receive wireless communication. Depending upon the nature of the apparatus, a user interface 212 (e.g., keypad, display, speaker, microphone, joystick, touchscreen, touchpad) may also be provided. The various components and blocks of the apparatus 200 may be implemented in firmware, software, hardware, or a combination of firmware, software and hardware.

In some aspects of the disclosure, the processor 204 may be configured to perform P2P communication related functionality. For example, the processor 204 may include a P2P group selection block 220 and an interference margin measurement block 224. The P2P group selection block 220 may include a bandwidth (BW) selection block 226, a channel (CH) selection block 228, and a group owner (GO) selection block 222. The P2P group selection block 220 may be configured to perform functions related to bandwidth, channel, and group owner selection. The bandwidth selection block 226 may be configured to select a bandwidth among available bandwidths supported by the apparatus 200. The channel selection block 228 may be configured to select one or more channels (or carriers) among available channels supported by the apparatus 200.

The GO selection block 222 may be configured to perform functions related to the selection of a group owner of a P2P group or network including the apparatus 200 and one or more other peers. For example, the GO selection block 222 may be configured to determine, select, and/or adjust an intent value (e.g., 1 through 15) based on various factors including the interference environment experienced by the apparatus 200 and other peers. In some examples, user input or preference to be the GO may be a considered factor. During group negotiation, a peer having a higher intent value may indicate a higher probability or likelihood to be selected as the group owner.

The interference margin measurement block 224 may be configured to perform various functions related to an interference margin and a packet error rate (PER) at the apparatus 200. For example, the interference margin measurement block 224 may be configured to measure an interference margin at the bandwidths and channels supported by the apparatus 200. The interference margin may be determined based on the maximum noise and minimum noise of a channel with a certain bandwidth. The interference margin measurement block 224 may generate an interference margin report (e.g., interference margin report 238) including entries of the interference margins of different channel and bandwidth combinations. In some examples, the interference margin measurement block 224 may be configured to determine a packet error rate (PER) as a function of interference margin. The PER may correspond to the desired data rate (e.g., a predetermined data rate).

The processor 204 is responsible for managing the bus 202 and general processing, including the execution of software stored on the computer-readable medium 206. The software, when executed by the processor 204, causes the processing system 214 to perform the various functions described below for any particular apparatus. The computer-readable medium 206 may also be used for storing data that is manipulated by the processor 204 when executing software.

In some aspects of the disclosure, the software may include a bandwidth (BW) selection code 230, a channel (CH) selection code 232, a group owner (GO) selection code 234, and an interference margin measurement code 236. The bandwidth selection code 230 when executed by the processor 204 configures the bandwidth selection block 226 to perform the functions described in one or more of FIGs. 4-13. The channel selection code 232 when executed by the processor 204 configures the channel selection block 226 to perform the functions described in one or more of FIGs. 4-13. The GO selection code 234 when executed by the processor 204, configures the GO selection block 222 to perform the functions described in one or more of FIGs. 4-13. The interference margin measurement code 236 when executed by the processor 204, configures the interference margin measurement block 224 to perform the functions described in one or more of FIGs. 4-13.

One or more processors 204 in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium 206. The computer-readable medium 206 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium 206 may reside in the processing system 214, external to the processing system 214, or distributed across multiple entities including the processing system 214. The computer-readable medium 206 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

FIG. 3 is a call flow diagram illustrating the communication between two P2P devices in accordance with an aspect of the disclosure. In this particular example, a first P2P device 302 and a second P2P device 304 can communicate with each other according to WiFi-Direct procedures. In other aspects of the disclosure, the P2P devices may communicate with each other according to other P2P protocols. In general, the first and second P2P devices 302 and 304 may go through multiple handshaking stages to associate with each other as a P2P group. Each of these stages will be described in more detail below in reference to FIG. 3. In this disclosure, two P2P devices are considered to be associated with each other after they have successfully formed a P2P group.

In some examples, the P2P devices may communicate via an access point or a base station in addition to P2P communication. After the first P2P device 302 enables its P2P functionality, it scans and searches 306 in its proximity to find other P2P devices. This process may be referred to as the discovery phase in WiFi-Direct. For example, the first P2P device 302 may perform a typical Wi-Fi scan to find other P2P devices. If the second P2P device 304 is within a suitable range, the first P2P device 302 may find the second P2P device 304. Once the first P2P device 302 finds the second P2P device 304, other P2P devices, and/or existing P2P groups, it may perform a group negotiation procedure 308. The second P2P device 304 may perform a similar scanning and searching procedure to find a peer device (e.g., first P2P device 302).

During the scanning and searching procedure 306, the first P2P device 302 alternates between a search state and a listen state. In the search state, the first P2P device 302 scans for other peers (e.g., a second P2P device 304) by transmitting probe requests; and in the listen state, the first P2P device 302 listens for probe requests and responds with probe responses. Once the first and second P2P devices discover each other, they may start a group negotiation procedure 308 to determine the group owner (GO) and client of the P2P group. During the group negotiation procedure 308, the first P2P device 302 and second P2P device 304 collaboratively determine certain P2P group parameters for forming a P2P group. For examples, the P2P group parameters include group owner (GO) and bandwidth and channel(s) selection. The GO, group channel(s) and bandwidth may be determined during the group negotiation procedure 308. In some aspects of the disclosure, referring to FIG. 4, the P2P devices may utilize a bandwidth selection block 402 to select a bandwidth, and a channel selection block 404 to select channel(s) for the P2P group based on at least one of a data rate, a packet error rate (PER), an interference margin, and power consumption. The bandwidth selection block 402 may be the same as the BW selection block 226, and the channel selection block 404 may be the same as the CH selection block 228 (see FIG. 2). In one aspect of the disclosure, the GO, bandwidth, and channel(s) are selected prior to the P2P devices being associated with each other as a P2P group.

During the group negotiation procedure 308, the P2P devices transmit a GO intent value (e.g., a numerical parameter) to each other in GO negotiation requests, and the P2P device that declares the highest intent value may become the group owner. When two devices declare the same GO intent value, a tie-breaker bit included in the GO negotiation request may be used to determine the GO. The tie-breaker bit may be randomly set every time a GO negotiation request is sent. The P2P devices may consider various factors in order to set the GO intent value. In some aspects of the disclosure, a P2P device may consider the interference environment at the P2P device and/or other peers to determine its GO intent value. In some examples, the P2P device may take interference margin measurements at the P2P devices into consideration to improve bandwidth and channel selection for P2P communication. After the first and second P2P devices 302 and 304 have agreed on their respective roles (e.g., GO or client) and selected the bandwidth and channel(s), the P2P devices may be associated in a P2P group. After the group negotiation procedure 308, the P2P devices may perform a provisioning procedure 310. In one example, the provisioning procedure 310 may be a Wi-Fi Protected Setup (WPS) provisioning phase defined in the Wi-Fi Alliance, Wi-Fi Protected Setup Specification v1.0h, December 2006, which is incorporated herein by reference.

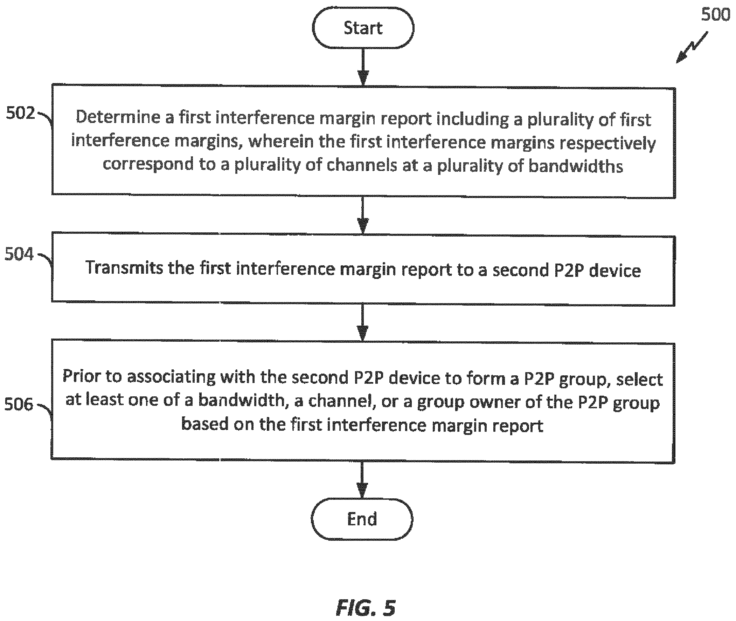

FIG. 5 is a flow chart illustrating a P2P group negotiation method 500 utilizing the interference environment of P2P devices in accordance with some aspects of the disclosure. The method 500 may be performed by a P2P device illustrated in any of FIGs. 1-3 or any suitable device. In one particular example, the P2P device may be the same as the P2P device 200. The P2P device 200 may perform the P2P group negotiation method 500 during the group negotiation procedure 310 of FIG. 3. At block 502, a first P2P device determines a first interference margin report including a plurality of first interference margins, wherein the first interference margins respectively correspond to a plurality of channels at a plurality of bandwidths. For example, the first P2P device may utilize an interference margin measurement block 224 (see FIG. 2) to determine the first interference margin report, which may be an interference margin report 238 stored in a computer-readable medium 206 (see FIG. 2).

Table 1 is an example of an interference margin report that includes a number of interference margins for the available channels and bandwidths. Each of the P2P devices generates such an interference margin report based on its own interference environment. Each of the interference margins in Table 1 corresponds to a certain combination of channel and bandwidth. In some examples, the channels and bandwidths may be the same as those available in a WiFi-Direct network or any suitable channels and bandwidths. In one particular example, the available channels may be all or some of the channels available in a Wi-Fi network (e.g., channels 1 through 14 in the 2.4 GHz band), and the available bandwidths may be 20 MHz (megahertz), 40 MHz, 80 MHz, and 160 MHz. A 40 MHz channel may include any two aggregated (bonded) 20 MHz channels, an 80 MHz channel may include any two aggregated 40 MHz channels, and a 160 MHz channel may include any two aggregated 80 MHz channels. In some aspects of the disclosure, the aggregated channels may be adjacent contiguous channels. No guard band or other channels are present between two contiguous channels. In some examples, the aggregated channels may include non-contiguous channels.

**Table 1**

| Bandwidth (MHz) | Channel Number(s) | Interference Margin (dBm) |
|---|---|---|
| 20 | A | $I_A$ |

(continued)

| Bandwidth (MHz) | Channel Number(s) | Interference Margin (dBm) |
|---|---|---|
| 20 | B | $I_B$ |
| . | . | . |
| . | . | . |
| 40 | A' | $I_{A'}$ |
| 40 | B' | $I_{B'}$ |
| . | . | . |
| . | . | . |
| 80 | A" | $I_{A''}$ |
| 80 | B" | $I_{B''}$ |
| . | . | . |
| | . | . |
| 160 | A''' | $I_{A'''}$ |
| 160 | B''' | $I_{B'''}$ |
| . | . | . |
| . | . | . |

In Table 1, the interference margin at each 20 MHz channel may be determined using any suitable methods. For example, the interference margin $I_A$ is the interference margin in dBm (decibel-milliwatt) of a channel A with a 20 MHz bandwidth. The measurement of the interference margin may be performed during a measurement cycle or a passive scanning window. The P2P device may periodically enter a listening mode (RX mode) for a pre-defined or predetermined time window to gather the interference information. This pre-defmed time window and periodicity are referred to as the "measurement cycle" in this disclosure. In some aspects of the disclosure, these measurements can be taken during the P2P scanning and searching procedure 306 and/or after the P2P devices have discovered each other. In some examples, the measurement cycle may be a duration that can vary from several tens of nanoseconds to hundreds of milliseconds, depending on the dynamic nature of the interference in the environment. In some aspects of the disclosure, the measurement cycle may be preconfigured before the measurement commences, and may be adjusted as measurements are taken and the variation in interference is tracked. During passive scanning for devices, the P2P devices may estimate the power in certain bandwidths to determine the interference margin. In one example, during the RX mode, the behavior of the P2P device may be substantially the same as the passive scanning procedure defined in the IEEE 802.11 standards.

In one example, the interference margin of a channel c with a bandwidth m may be defined by equation 1.

$$I_m^c = N_{max} - N_{min} \quad (1)$$

In equation 1, $N_{max}$ is the maximum noise in dBm, and $N_{min}$ is the minimum noise in dBm. The interference margin is a difference between the maximum noise and minimum noise. The noise may be determined empirically or through measurements over a certain time window. Multiple measurements may be made and averaged to determine the average noise. In one particular example, the minimum noise may be calculated as a function of bandwidth and temperature as defined in equation 2.

$$N_{min} = KBT \quad (2)$$

In equation 2, $K$ is the Boltzman Constant, $B$ is bandwidth, and $T$ is room temperature in Kelvin. In some aspects of the disclosure, the P2P device may measure the interference margins of different bandwidths (e.g., 20 MHz, 40 MHz, 80 MHz, and 160 MHz). For each bandwidth, the P2P device may measure the interference margin corresponding to a combination of one or more channels for providing that bandwidth. In some aspects of the disclosure, the P2P device may measure the interference margins of the individual channels (e.g., 20 MHz channels) and determine the interference margins for the aggregated channels by adding the interference margins of the individual channels.

Once the interference margin report (e.g., Table 1) is built, the P2P device broadcasts, publishes, or transmits the report to other peer devices within a communication range of the P2P device. In addition, the P2P device may receive similar interference margin reports broadcasted by the peer devices. The interference margin report generated by the P2P device itself is the local report, and the interference margin reports received from other peer devices are the global reports.

Referring to FIG. 5, at block 504, the P2P device transmits the first interference margin report (local report) to a second P2P device. The second P2P device may be a P2P device illustrated in any of FIGs. 1-3 or any suitable device. Moreover, the first P2P device receives a second interference margin report from the second P2P device. The second interference margin report (global report) includes a plurality of second interference margins respectively corresponding to the plurality of channels at the plurality of bandwidths. The channels and bandwidths contained in the local report and global report may be the same or different. For example, the first P2P device may support more or fewer channels and bandwidths than that of the second P2P device.

At block 506, prior to associating with the second P2P device to form a P2P group, the P2P device selects at least one of a bandwidth, a channel, or a group owner of the P2P group based on the first interference margin report and/or the second interference margin report.

**Bandwidth Selection**

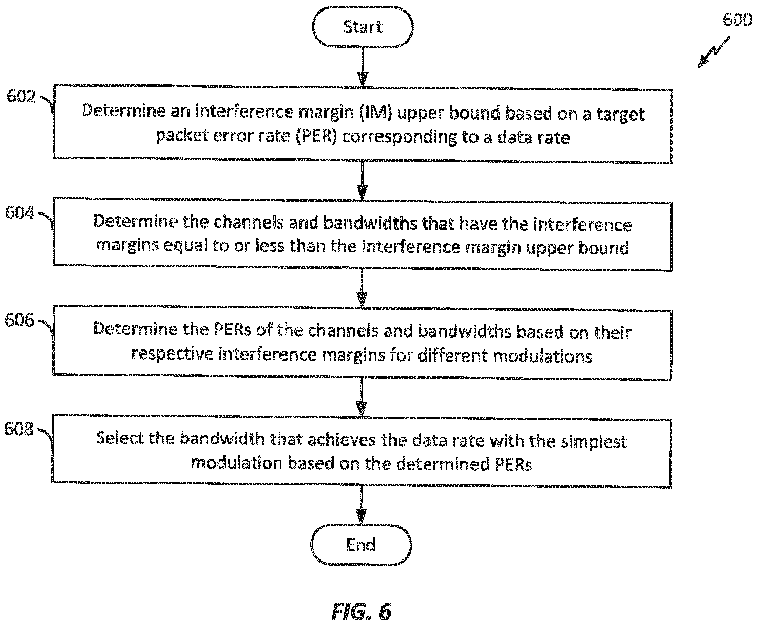

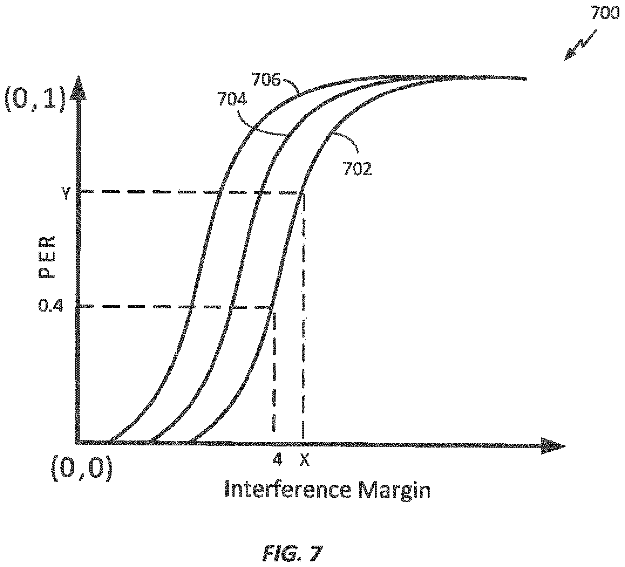

FIG. 6 is a flow chart illustrating a bandwidth selection method 600 in accordance with some aspects of the disclosure. The bandwidth selection method 600 may be performed by a P2P device illustrated in any of FIGs. 1-3 or any suitable device. In one particular example, the P2P device 200 may perform the bandwidth selection method 600 at block 310 of FIG. 3 and block 506 of FIG. 5. At block 602, the P2P device determines an interference margin (IM) upper bound based on a target packet error rate (PER) corresponding to a data rate (e.g., a predetermined data rate). The PER is a ratio of the number of incorrectly received data packets divided by the total number of received packets. For example, the P2P device may utilize the interference margin measurement block 224 to determine the interference margin upper bound. To determine the interference margin upper bound, the P2P device may utilize the relationship between the PER and interference margin. FIG. 7 is a chart 700 illustrating the relationship between PER and interference margin for various modulation schemes in accordance with an aspect of the disclosure. Some non-limiting examples of modulation schemes are BPSK (binary phase-shift keying) 702, QPSK (quadrature phase-shift keying) 704, 16-QAM (quadrature amplitude modulation) 706, and 256-QAM.

The relationship between PER and interference margin may be determined for various modulation and coding schemes. In some examples, the coding schemes may include Wi-Fi coding schemes that utilize coding techniques such as the binary convolution codes or low-density parity check (LDPC) codes and different code rates 1/2, 2/3, 2/4, 5/6. The code rate quantifies the amount of redundancy added to the data stream in terms of the number of bits at the input of the encoder versus the number of bits actually transmitted. As illustrated in FIG. 7, the PER generally increases from 0 to 1 (i.e., lowest error to highest error) as the interference margin increases. The relationship between the PER and interference margin (e.g., chart 700 of FIG. 7 or a profile table) may be measured offline and loaded into the devices (e.g., factory setting). In some aspects of the disclosure, the relationship between the PER and interference margin may be determined through empirical measurements. For example, for a certain modulation and code rate, different interference values may be injected or introduced in the environment, and the number of packets observed in error may be compared to the number of packets sent. This empirical measurement may be performed during a factory calibration process. In some aspects of the disclosure, an analytical expression for estimating the relationship between the PER and interference margin may be derived. Once the relationship is available, the information may be pre-programmed in the memory (e.g., a computer-readable medium 206 of FIG. 2) to be used during the bandwidth and channel selection process.

In some examples, the interference margin of FIG. 7 may be an average interference margin of a number of interference margins measured over a period of time. The PER vs. interference margin chart 700 (or in the form of a profile table) may be determined by any suitable methods and stored at a computer-readable medium 206 (see FIG. 2) of the P2P device. The PER vs. interference margin chart 700 may be predetermined and stored at the P2P device during manufacturing of the device.

To achieve a certain data rate R (e.g., bits per second), a target PER is set. In an illustrative example, it is assumed that the target PER is less than or equal to 0.4 (i.e., PER $\leq$ 0.4) to achieve a certain data rate. The target PER may be based on the target application and other error recovery mechanisms between the PHY/MAC layers and the application layers. The application may have a target packet loss that is tolerable. For example, for voice applications, ten percent (10%) packet loss may be acceptable. Because voice applications or similar applications allow for PHY/MAC error recovery and no recovery at other layers, then the application packet loss of 10% in this case translates into a PER of 10%. In some aspects of the disclosure, the target PER may be set by an application of the device. In some aspects of the disclosure, the target PER may be determined based on the data rate and throughput requirement of the application. After the target PER is determined, the P2P device may utilize the chart of FIG. 7 or a corresponding profile table to determine the interference margin (IM) upper bound. In this particular example, the IM upper bound for BPSK modulation has a value of 4 corresponding to the PER of 0.4.

At block 604, the P2P device determines the channels and bandwidths (e.g., in both the local report and global report) that have their interference margins equal to or less than the IM upper bound. For example, the P2P device may utilize the interference margin measurement block 224, the BW selection block 226, and the CH selection block 228 (see FIG. 2) to determine these channels and bandwidths. In effect, the channels and bandwidths that have their interference margins greater than the IM upper bound are eliminated from bandwidth and channel selection during P2P group negotiation because these channels and bandwidths cannot achieve the desired PER based on the chart 700 of FIG. 7. For example, according to FIG. 7, if the interference margin of a certain channel/bandwidth has a value X greater than 4, the corresponding PER has a value Y greater than the target PER value of 0.4.

At block 606, the P2P device determines the PERs of the channels and bandwidths based on their respective interference margins for different modulations. These channels and bandwidths options are those determined at block 604 that have their interference margins equal to or less than the IM upper bound determined at block 602. For example, the P2P device may utilize the interference margin measurement block 224 (see FIG. 2) to determine the PERs of these channels and bandwidths for different modulations. In general, for the same interference margin, a simpler modulation (e.g., BPSK) can achieve lower PER (i.e., more robust) than that of more efficient modulations (e.g., QPSK, 16-QAM, and 256-QAM). A more efficient modulation enables a device to communicate at a higher data rate for the same amount of bandwidth than that of a simpler modulation.

At block 608, the P2P device selects the bandwidth that achieves the desired data rate with the simplest modulation (highest modulation efficiency) based on the PERs determined at block 606. For example, the P2P device may utilize the BW selection block 226 (see FIG. 2) to select the bandwidth. By way of an example, the PERs of certain 40 MHz channel and 80 MHz channel are both less than the target PER (e.g., PER < 0.4). In this particular example, the 80 MHz channel may utilize BPSK modulation, and the 40 MHz channel may utilize more complicated (less efficient) modulations such as QPSK, 16-QAM, and 256-QAM to achieve the same data rate. Therefore, the P2P device selects the 80 MHz channel because it can achieve the desired data rate using a simpler modulation.

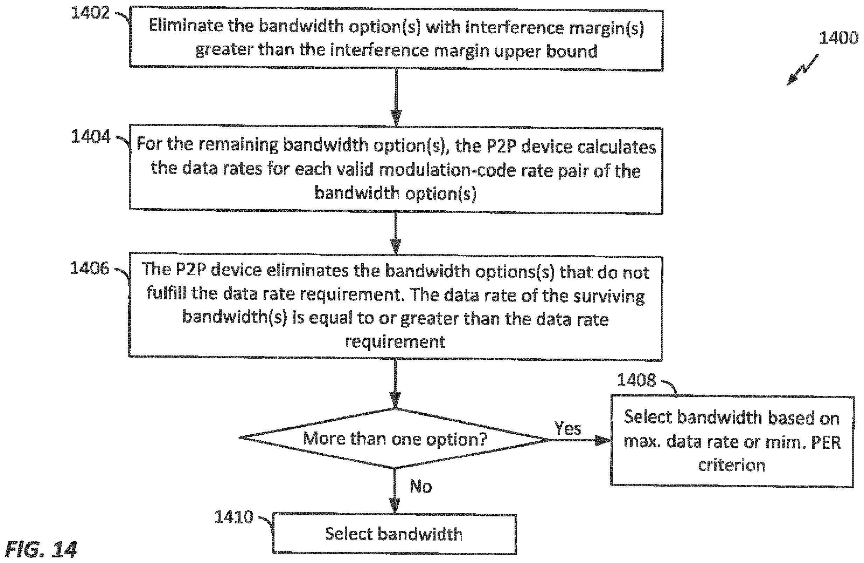

In some examples, where the relationship between the PER for the modulation-code rate pair and the interference margin is used, the following procedures may be used in selecting the bandwidth (e.g., an optimal bandwidth) as illustrated in FIG. 14. At block 1402, the P2P device eliminates the bandwidth option(s) with interference margin(s) greater than the interference margin upper bound. At block 1404, for the remaining bandwidth option(s), the P2P device calculates the data rates for each valid modulation-code rate pair of the bandwidth option(s) using the following expression.

$$R = \frac{Code\ Rate * \dfrac{Number\ of\ Bits}{Modulation\ Symbol} * \dfrac{Number\ of\ Modulation\ Symbols}{OFDM\ Symbol}}{OFDM\ Symbol\ Duration}$$

In some non-limiting examples, the code rate values may be 1/2 2/3, 3/4, and 5/6. The "Number of Bits/Modulation Symbols" term is a function of the modulation technique and may have values such as 1 for BPSK, 2 for QPSK, 4 for 16QAM, etc. The "Number of Modulation Symbols/OFDM Symbol" term may have a value of 48 or 52, and the OFDM Symbol Duration term may take on values of 3.6 microseconds or 4 microseconds depending on the cyclic prefix length.

At block 1406, for each bandwidth option, the P2P device eliminates the modulation-code rate combination that does not fulfill the data rate requirement (e.g., a predetermined data rate). The data rate of the eliminated bandwidth option is less than data rate requirement. The remaining bandwidth option(s) will meet the data rate and PER requirements. That is, the data rate of the remaining or surviving bandwidth option(s) is equal to or greater than the data requirement. If there is more than one remaining bandwidth option, at block 1408, the P2P device may select the desired bandwidth using other suitable criterion such as selecting the bandwidth option with 1) the maximum data rate or 2) the bandwidth option with the minimal PER. In one example, if the goal is to maximize data rate, the P2P device selects the bandwidth option with the maximum data rate. In this case, the PER for this option may be equal to or less than the target PER. In another example, if the goal is to minimize PER, the P2P device selects the bandwidth option with the minimum PER. In this case, the data rate for this option may be equal to or higher than the data rate requirement. If there is only one remaining bandwidth option, at block 1410, the P2P device selects this bandwidth option.

In some aspects of the disclosure, if the P2P device is equipped with multiple antennas. In this particular example, the impact of multiple antennas may be factored into the above-described bandwidth selection algorithms by utilizing the relationship between the PER for a 3-tuple modulation-code rate-multiple antenna configuration and interference margin. The data rate equation may be revised to account for multiple antennas. In one example, the data rate may be expressed as follows.

$$R = \frac{Code\ Rate * \frac{Number\ of\ Bits}{Modulation\ Symbol} * \frac{Number\ of\ Modulation\ Symbols}{OFDM\ Symbol} * Number\ of\ Antennas}{OFDM\ Symbol\ Duration}$$

The "Number of Antennas" term may be an integer value (e.g., 1, 2, 3, etc.).

**Channel Selection**

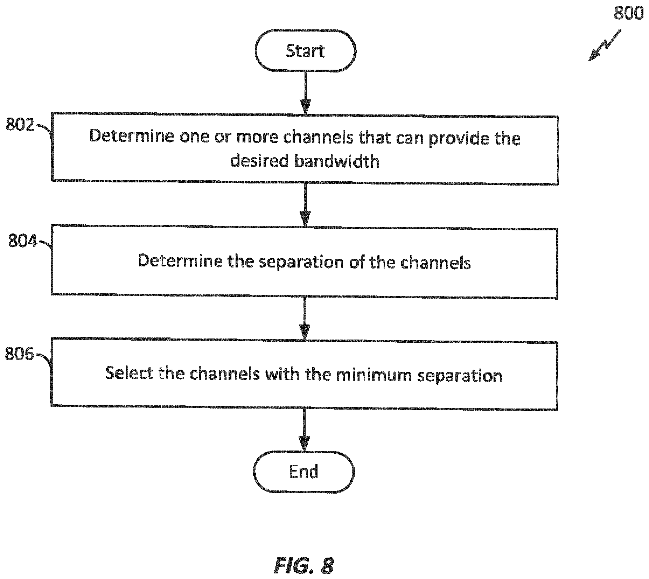

Referring back to FIG. 5, at block 506, prior to associating with the second P2P device to form a P2P group, the P2P device selects at least one of a bandwidth, a channel, or a group owner of the P2P group based on a first interference margin report. FIG. 8 is a flow chart illustrating a channel selection method 800 for reducing power consumption in accordance with an aspect of the disclosure. The channel selection method 800 may be performed by a P2P device illustrated in any of the FIGs. 1-3 or any suitable apparatus. In one particular example, the P2P device 200 may perform the channel selection method 800 in the block 310 of FIG. 3 and block 506 of FIG. 5.

At block 802, a P2P device determines one or more channels that provide the desired bandwidth. For example, the P2P device may utilize the channel selection block 228 (see FIG. 2) to select the channels having the bandwidths that are determined by the bandwidth selection method 600. At block 804, the P2P device determines the separation of the channels. The P2P device may utilize the channel selection block 228 to determine the respective separation among the channels. At block 806, the P2P device selects the channels with the minimal separation. In some aspects of the disclosure, the P2P device may not select the channels with the minimum separation. In various aspects of the disclosure, the P2P device may select the channels based on channel separation, interference margin, and other suitable factors.

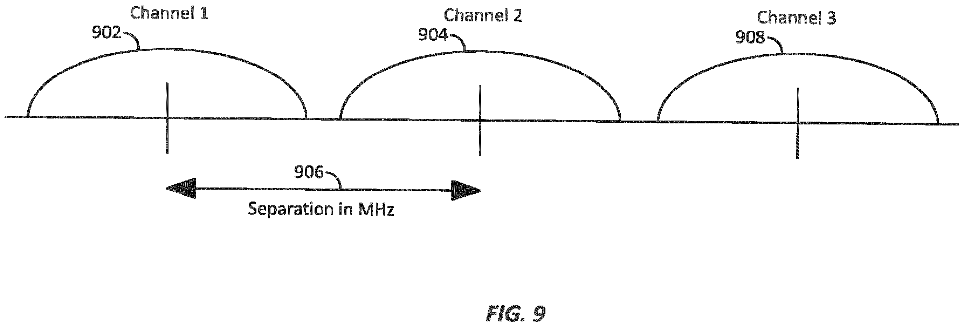

In one particular example, the P2P device selects two channels from among the channels determined at block 804 to provide the selected bandwidth. The P2P device may utilize the channel selection block 228 to select a first channel 902 and a second channel 904 (see FIG. 9) to achieve the desired bandwidth. In one example, each of the channels may have a W MHz bandwidth, and the channels are aggregated or bonded to provide a 2W MHz bandwidth. While this example utilizes two channels with the same bandwidth, the P2P device may aggregate two or more channels with the same or different bandwidths to achieve the desired bandwidth in accordance with other aspects of this disclosure. In some examples, the channels may be contiguous, partially overlapping, or separated by a guard band.

The P2P device may determine the desired bandwidth based on the applications or processes at the P2P device and/or the peer devices. For example, the P2P device may initially utilize a W MHz bandwidth channel, but may utilize extra bandwidth (e.g., 2 W MHz) later when needed. Therefore, the P2P device may perform the channel selection method 800 to select two or more channels prior to associating with other P2P peers in a P2P group even when the P2P device initially does not utilize all the bandwidths.

In this particular example, the P2P device may select to aggregate the first channel 902 and a third channel 908, but such channel bonding has a wider channel separation than that of the first and second channels. Therefore, the P2P device may reduce power consumption by reducing or minimizing the channel separation by selecting first and second channels. In general, if the center frequencies of the channels are farther apart, there is a higher probability that the P2P device may need to utilize more radio frequency (RF) components to aggregate such channels. Some non-limiting examples of RF components are analog-to-digital converter (ADC), digital-to-analog converter (DAC), low-noise amplifier, and mixer and oscillators for down conversion.

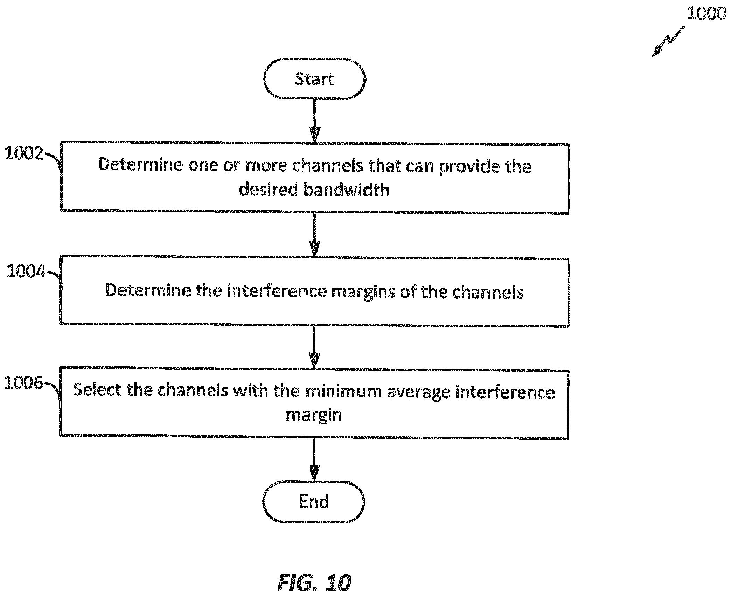

FIG. 10 is a flow chart illustrating a channel selection method 1000 for reducing interference in accordance with an aspect of the disclosure. The channel selection method 1000 may be performed by a P2P device illustrated in any of the FIGs. 1-3 or any suitable apparatus. In one particular example, the P2P device 200 may perform the channel selection method 1000 at block 310 of FIG. 3 and block 506 of FIG. 5.

At block 1002, a P2P device determines one or more channels that provide the desired bandwidth. For example, the P2P device may utilize the channel selection block 228 (see FIG. 2) to select the channels having the bandwidths that are determined by the bandwidth selection method 600. At block 1004, the P2P device determines the interference margins of the channels. The P2P device may utilize the interference margin measurement block 224 to determine the respective interference margins of the channels. At block 1006, the P2P device selects the channels with the minimal average interference margin locally and/or globally. In some aspects of the disclosure, the P2P device may not select the channels with the minimum average interference margins. In various aspects of the disclosure, the P2P device may select the channels based on channel separation, interference margins, and other suitable factors.

In one particular example, the P2P device selects two channels from among the channels determined at block 1004 to provide the selected bandwidth. In the related art, a P2P device will select the first channel 1102 before association because this channel has the lowest interference margin, then if the P2P device determines that more bandwidth is needed after association, the P2P device will select the adjacent second channel 1104 to be aggregated with the first channel 1102. However, this channel selection scheme leads to a suboptimal selection because the second channel 1104 has substantially higher interference than that of the third channel 1106 and fourth channel 1108.

In accordance with aspects of the disclosure, the bandwidth and channel selection procedures are performed before group association while minimizing interference. In one particular example, the P2P device selects the third channel 1106 and fourth channel 1108 even though the P2P device may initially need the bandwidth of one channel. In one example, each of the channels may have a W MHz bandwidth, and the channels are aggregated or bonded to provide a 2W MHz bandwidth. While this illustrative example utilizes two channels with the same bandwidth, the P2P device may aggregate two or more channels with the same or different bandwidths to achieve the desired bandwidth in accordance with other aspects of this disclosure. In some examples, the channels may be contiguous, partially overlapping, or separated by a guard band.

The P2P device may determine the desired bandwidth based on the applications or processes at the P2P device and/or the peer devices. For example, the P2P device may initially utilize a W MHz bandwidth channel, but may later utilize extra bandwidth (e.g., 2W MHz) as needed. Therefore, the P2P device may perform the channel selection method 1000 to select two or more channels prior to associating with other P2P peers in a P2P group even when the P2P device initially does not utilize all selected channels.

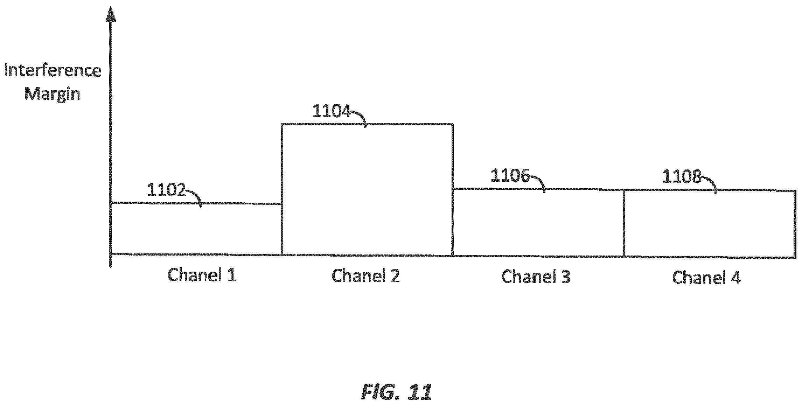

In some aspects of the disclosure, the P2P device may determine the respective interference margins of the channels based on the local and/or global interference margin tables (e.g., interference margin tables 238 of FIG. 2). FIG. 11 is a drawing illustrating an example of P2P channels and their respective interference margins. The first channel 1102 has the lowest interference margin, and the second channel 1104 has the highest interference margin, among these channels. The interference margins of the third channel 1106 and fourth channel 1108 are higher than that of the first channel 1102 but lower than that of the second channel 1104. In one particular example, the P2P device may determine to select the third and fourth channels because their average interference margin is minimum among any two contiguous channels in FIG. 4. In other examples, if P2P device can aggregate non-contiguous channels, the P2P may select the first and third channels (1102 and 1106) because their average interference margin will be minimum among the four channels of FIG. 4. In some aspects of the disclosure, the channel selection methods of FIGs. 8-11 may be combined such that the channel separation and/or average interference margin of the selected channels may be minimized or reduced.

**Group Owner Selection**

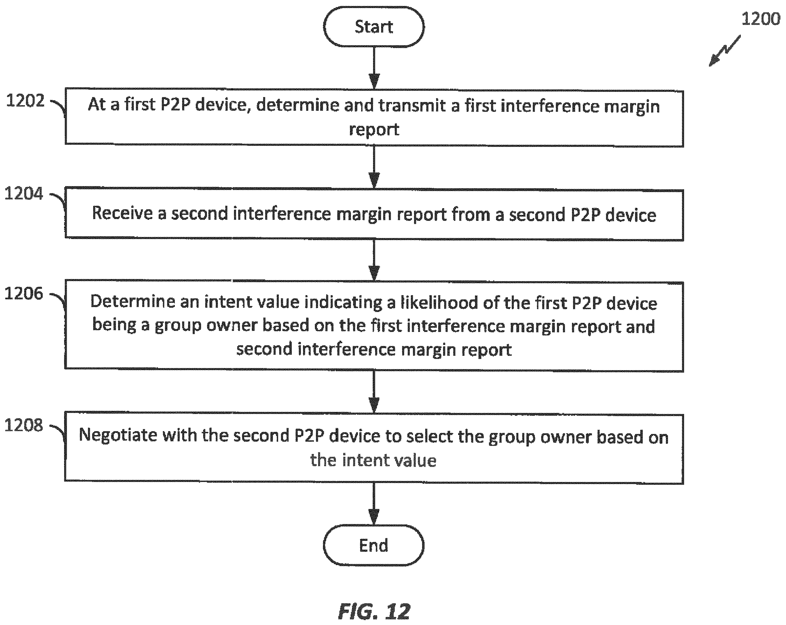

FIG. 12 is a flow chart illustrating a P2P group owner selection method 1200 in accordance with some aspects of the disclosure. The group owner selection method 1200 may be performed by a P2P device illustrated in any of FIGs. 1-3 or any suitable apparatus. In one particular example, the P2P device 200 may perform the group owner selection method 1200 at block 310 of FIG. 3 and block 506 of FIG. 5. In one particular example, the P2P device may utilize a group owner selection block 222 (see FIG. 2) to perform the group owner selection method 1200.

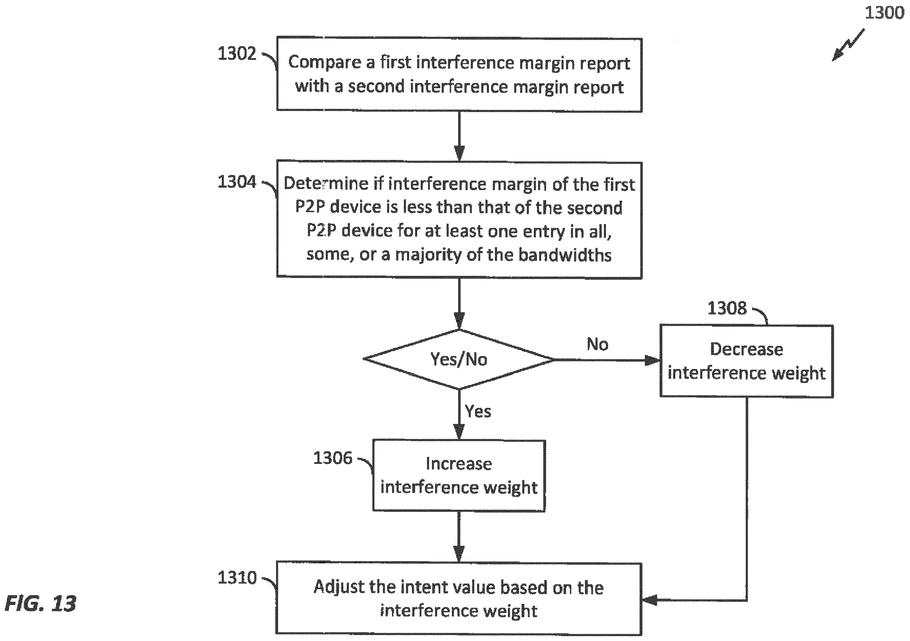

At block 1202, a first P2P device determines and transmits a first interference margin report (a local report) to a second P2P device. The second P2P device may be a P2P device illustrated in any of FIGs. 1-3 or any suitable device. At block 1204, the first P2P device receives a second interference margin report (a global report) from the second P2P device. In one example, the first interference margin report and second interference margin report may be the same as the interference margin reports 238 of FIG. 2. At block 1206, the first P2P device determines an intent value indicating a likelihood of the first P2P device being a group owner (GO) based on the first interference margin report and second interference margin report. At block 1208, the first P2P device negotiates with the second P2P device to select the group owner based on their respective intent values. In one example, the P2P devices transmit GO negotiation requests to each other, and the P2P device with the highest intent value may be selected as the group owner. In some examples, the intent value may be adjusted or biased by an interference weight as described in relation to FIG. 13 below. When both P2P devices declare the same intent value, a tie-breaker bit included in the negotiation request may be used to determine the GO. The tie-breaker bit may be randomly set every time a GO negotiation request is sent. The P2P devices may also consider other suitable factors in addition to the intent value in order to select the GO.

FIG. 13 is a flow chart illustrating an intent value determination method 1300 in accordance with an aspect of the disclosure. The intent value determination method 1300 may be performed by a P2P device illustrated in any of FIGs. 1-3 or any suitable apparatus. In one particular example, the P2P device may utilize a GO selection block 222 (see FIG. 2) to perform the intent value determination method 1300 at block 1206 of FIG. 12. At block 1302, a first P2P device compares a first interference margin report with a second interference margin report. For example, the first interference margin report may be a local report determined at the first P2P device, and the second interference margin report may be a global report received from a second P2P device.

At block 1304, the first P2P device determines if the interference margin of the first P2P device is less than that of the second P2P device for at least one entry in all, some, or a majority of the bandwidths. If the interference margin of the first P2P device is less than that of the second P2P device for at least one entry in all, some, or a majority of the bandwidths, the method proceeds to block 1306; otherwise, the method proceeds to block 1308. In one example, the interference margin reports may include entries for 20 MHz, 40 MHz, 80 MHz and 160 MHz bandwidth channels similar to those illustrated in Table 1 above.

The first P2P device may be aware of the application throughput requirements and hence may determine the suitable bandwidth prior to group owner negotiation. Therefore, at block 1304, the first P2P device may determine if the interference margin of the first P2P device is less than that of the second P2P device for at least one entry in one or more predetermined bandwidths.

Based on the results of the comparison, the first P2P device may utilize an interference weight to adjust the intent value as defined by equation 3.

$$\text{Intent Value} = \text{Intent Value} + \text{Interference Weight} \quad (3)$$

The interference weight is a value that can be increased or decreased based on the comparison between the first and second interference margin reports. A default value or initial value of the interference weight may be zero or any suitable value. In some examples, the interference weight may be an integer. In some examples, the interference weight may be a non-integer. At block 1306, the first P2P device increases the interference weight by a certain amount. To the contrary, at block 1308, the first P2P device decreases the interference weight by a certain amount. In some examples, the interference weight may be increased/decrease by an amount that is based on the difference between the interference margins. At block 1310, the first P2P device adjusts the intent value based on the interference weight according to equation 3. In some examples, the first P2P device may increase and/or decrease the interference weight by an amount in relation to the number of interference margin report entries that the interference margin of the first P2P device is less than that of the second P2P device. In one particular example, the first P2P device may increase and/or decrease the interference weight by an amount proportional to the number of entries that the interference margin of the first P2P device is less than that of the second P2P device.

Several aspects of a wireless communication system have been presented with reference to a P2P communication system. As those skilled in the art will readily appreciate, various aspects described throughout this disclosure may be extended to other telecommunication systems, network architectures and communication standards.

By way of example, various aspects may be extended to UMTS systems such as TD-SCDMA and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first die may be coupled to a second die in a package even though the first die is never directly physically in contact with the second die. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components, steps, features and/or functions illustrated in FIGs. 1-14 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGs. 1-4 may be configured to perform one or more of the methods, features, or steps described herein. The novel algorithms described herein may also be efficiently implemented in software, firmware, and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims.

**Examples**

1. A method of wireless communication operable at a first peer-to-peer (P2P) device, the method comprising: determining a first interference margin report comprising a plurality of first interference margins, wherein the first interference margins respectively correspond to a plurality of channels at a plurality of bandwidths; transmitting the first interference margin report to a second P2P device; and prior to associating with the second P2P device to form a P2P group, selecting at least one of a bandwidth, a channel, or a group owner of the P2P group based on the first interference margin report.

2. The method of example 1, further comprising: determining an interference margin (IM) upper bound based on a target packet error rate (PER) corresponding to a predetermined data rate; and selecting a bandwidth among a plurality of bandwidths capable of communication with the second P2P device at the predetermined data rate, wherein the first interference margins of the plurality of bandwidths are less than the IM upper bound.

3. The method of example 2, wherein the selecting the bandwidth comprises: among the plurality of bandwidths capable of communication with the second P2P device at the predetermined data rate, selecting the bandwidth with a modulation efficiency lower than that of the others of the plurality of bandwidths.

4. The method of example 2, wherein the selecting the bandwidth comprises:

  eliminating one or more first bandwidths among the plurality of bandwidths, wherein the interference margins of the first bandwidths are greater than the IM upper bound;
  calculating the data rates for the remaining bandwidths; eliminating one or more second bandwidths of the remaining bandwidths based on the data rates, wherein the data rates of the eliminated second bandwidths are less than the predetermined data rate; and
  selecting the bandwidth with a maximum data rate or a minimum PER.

5. The method of example 2, further comprising: selecting two or more channels among a plurality of channels to provide the selected bandwidth, while at least one of minimizing a separation between the selected channels, or minimizing an average interference margin of the selected channels, wherein the first interference margins of the plurality of channels are less than the IM upper bound.

6. The method of example 1, further comprising: receiving a second interference margin report from the second P2P device, wherein the second interference margin report comprises a plurality of second interference margins respectively corresponding to a plurality of second channels at a plurality of second bandwidths, prior to associating with the second P2P device as the P2P group, selecting at least one of the bandwidth, the channel, or the group owner of the P2P group based on the first interference margin report and second interference margin report.

7. The method of example 1, further comprising: receiving a second interference margin report from the second P2P device, wherein the second interference margin report comprises a plurality of second interference margins respectively corresponding to a plurality of second channels at a plurality of second bandwidths, determining an intent value indicating a likelihood of the first P2P device being the group owner based on the first interference margin report and second interference margin report; and negotiating with the second P2P device to select the group owner based on the intent value.

8. The method of example 7, wherein the determining the intent value comprises:

  comparing the first interference margins with the second interference margins to determine an interference weight; and adjusting the intent value based on the interference weight.

9. A first peer-to-peer (P2P) device comprising: means for determining a first interference margin report comprising a plurality of first interference margins, wherein the first interference margins respectively correspond to a plurality of channels at a plurality of bandwidths; means for transmitting the first interference margin report to a second P2P device; and means for prior to associating with the second P2P device to form a P2P group, selecting at least one of a bandwidth, a channel, or a group owner of the P2P group based on the first interference margin report.

10. The first P2P device of example 9, further comprising: means for determining an interference margin (IM) upper bound based on a target packet error rate (PER) corresponding to a predetermined data rate; and means for selecting a bandwidth among a plurality of bandwidths capable of communication with the second P2P device at the predetermined data rate, wherein the first interference margins of the plurality of bandwidths are less than the IM upper bound.

11. The first P2P device of example 10, wherein the means for selecting the bandwidth is configured to: among the plurality of bandwidths capable of communication with the second P2P device at the predetermined data rate, select the bandwidth with a modulation efficiency lower than that of the others of the plurality of bandwidths.

12. The first P2P device of example 10, further comprising: means for selecting two or more channels among a plurality of channels to provide the selected bandwidth, while at least one of minimizing a separation between the selected channels, or minimizing an average interference margin of the selected channels, wherein the first interference margins of the plurality of channels are less than the IM upper bound.

13. The first P2P device of example 9, further comprising: means for receiving a second interference margin report from the second P2P device, wherein the second interference margin report comprises a plurality of second interference margins respectively corresponding to a plurality of second channels at a plurality of second bandwidths, means for prior to associating with the second P2P device as the P2P group, selecting at least one of the bandwidth, the channel, or the group owner of the P2P group based on the first interference margin report and second interference margin report.

14. The first P2P device of example 9, further comprising: means for receiving a second interference margin report from the second P2P device, wherein the second interference margin report comprises a plurality of second interference margins respectively corresponding to a plurality of second channels at a plurality of second bandwidths, means for determining an intent value indicating a likelihood of the first P2P device being the group owner based on the first interference margin report and second interference margin report; and means for negotiating with the second P2P device to select the group owner based on the intent value.

15. The first P2P device of example 14, wherein the means for determining the intent value is configured to: compare the first interference margins with the second interference margins to determine an interference weight; and adjust the intent value based on the interference weight.

16. A first peer-to-peer (P2P) device comprising: a communication interface configured to transmit a first interference margin report to a second P2P device; a memory comprising software; and at least one processor operatively coupled to the communication interface and memory, wherein the at least one processor when configured by the software, comprises: an interference margin measurement block configured to determine the first interference margin report comprising a plurality of first interference margins, wherein the first interference margins respectively correspond to a plurality of channels at a plurality of bandwidths; and a P2P group selection block configured to prior to associating with the second P2P device to form a P2P group, select at least one of a bandwidth, a channel, or a group owner of the P2P group based on the first interference margin report.

17. The first P2P device of example 16, wherein the at least one processor further comprises an interference margin measurement block configured to determine an interference margin (IM) upper bound based on a target packet error rate (PER) corresponding to a predetermined data rate, and wherein the P2P group selection block comprises a bandwidth selection block configured to select a bandwidth among a plurality of bandwidths capable of communication with the second P2P device at the predetermined data rate, wherein the first interference margins of the plurality of bandwidths are less than the IM upper bound.

18. The first P2P device of example 17, wherein the bandwidth selection block is further configured to: among the plurality of bandwidths capable of communication with the second P2P device at the predetermined data rate, select the bandwidth with a modulation efficiency lower than that of the others of the plurality of bandwidths.

19. The first P2P device of example 17, wherein the bandwidth selection block is further configured to: eliminate one or more first bandwidths among the plurality of bandwidths, wherein the interference margins of the first bandwidths are greater than the IM upper bound; calculate the data rates for the remaining bandwidths; eliminate one or more second bandwidths of the remaining bandwidths based on the data rates, wherein the data rates of the eliminated second bandwidths are less than the predetermined data rate; and select the bandwidth with a maximum data rate or a minimum PER.

20. The first P2P device of example 17, wherein the P2P group selection block comprises a channel selection block configured to: select two or more channels among a plurality of channels to provide the selected bandwidth, while at least one of minimizing a separation between the selected channels, or minimizing an average interference margin of the selected channels, wherein the first interference margins of the plurality of channels are less than the IM upper bound.

21. The first P2P device of example 16, wherein the communication interface is further configured to receive a second interference margin report from the second P2P device, wherein the second interference margin report comprises a plurality of second interference margins respectively corresponding to a plurality of second channels at a plurality of second bandwidths, and wherein the P2P group selection block is further configured to prior to associating with the second P2P device as the P2P group, select at least one of the bandwidth, the channel, or the group owner of the P2P group based on the first interference margin report and second interference margin report.

22. The first P2P device of example 16, wherein the communication interface is further configured to receive a second interference margin report from the second P2P device, wherein the second interference margin report comprises a plurality of second interference margins respectively corresponding to a plurality of second channels at a plurality of second bandwidths, wherein the P2P group selection block further comprises a group owner selection block configured to: determine an intent value indicating a likelihood of the first P2P device being the group owner based on the first interference margin report and second interference margin report; and negotiate with the second P2P device to select the group owner based on the intent value.

23. The first P2P device of example 22, wherein the group owner selection block is further configured to: compare the first interference margins with the second interference margins to determine an interference weight; and adjust the intent value based on the interference weight.

24. A computer program product comprising: a computer-readable medium comprising code for causing a first peer-to-peer (P2P) device to: determine a first interference margin report comprising a plurality of first interference margins, wherein the first interference margins respectively correspond to a plurality of channels at a plurality of bandwidths; transmit the first interference margin report to a second P2P device; and prior to associating with the second P2P device to form a P2P group, select at least one of a bandwidth, a channel, or a group owner of the P2P group based on the first interference margin report.

25. The computer program product of example 24, wherein the computer-readable medium further comprises code for causing the first P2P device to: determine an interference margin (IM) upper bound based on a target packet error rate (PER) corresponding to a predetermined data rate; and select a bandwidth among a plurality of bandwidths capable of communication with the second P2P device at the predetermined data rate, wherein the first interference margins of the plurality of bandwidths are less than the IM upper bound.

26. The computer program product of example 25, wherein for selecting the bandwidth, the computer-readable medium further comprises code for causing the first P2P device to: among the plurality of bandwidths capable of communication with the second P2P device at the predetermined data rate, select the bandwidth with a modulation efficiency lower than that of the others of the plurality of bandwidths.

27. The computer program product of example 25, wherein the computer-readable medium further comprises code for causing the first P2P device to: select two or more channels among a plurality of channels to provide the selected bandwidth, while at least one of minimizing a separation between the selected channels, or minimizing an average interference margin of the selected channels, wherein the first interference margins of the plurality of channels are less than the IM upper bound.

28. The computer program product of example 24, wherein the computer-readable medium further comprises code for causing the first P2P device to: receive a second interference margin report from the second P2P device, wherein the second interference margin report comprises a plurality of second interference margins respectively corresponding to a plurality of second channels at a plurality of second bandwidths, prior to associating with the second P2P device as the P2P group, select at least one of the bandwidth, the channel, or the group owner of the P2P group based on the first interference margin report and second interference margin report.

29. The computer program product of example 24, wherein the computer-readable medium further comprises code for causing the first P2P device to: receive a second interference margin report from the second P2P device, wherein the second interference margin report comprises a plurality of second interference margins respectively corresponding to a plurality of second channels at a plurality of second bandwidths, determine an intent value indicating a likelihood of the first P2P device being the group owner based on the first interference margin report and second interference margin report; and negotiate with the second P2P device to select the group owner based on the intent value.

30. The computer program product of example 29, wherein for determine the intent value, the computer-readable medium further comprises code for causing the first P2P device to: compare the first interference margins with the second interference margins to determine an interference weight; and adjust the intent value based on the interference weight.

**Claims**

1. A method (500) of wireless communication operable at a first peer-to-peer, P2P, device (302), the method (500) comprising:

determining (502) a first interference margin report (238) comprising a plurality of first interference margins, wherein the first interference margins respectively correspond to a plurality of first channels at a plurality of first bandwidths;

transmitting (504) the first interference margin report (238) to a second P2P device (304); and

prior to associating with the second P2P device (304) to form a P2P group, selecting (506) at least one of a bandwidth, a channel, or a group owner of the P2P group based on the first interference margin report;

receiving a second interference margin report from the second P2P device (304), wherein the second interference margin report comprises a plurality of second interference margins respectively corresponding to a plurality of second channels at a plurality of second bandwidths,

determining an intent value indicating a likelihood of the first P2P device (302) being the group owner based on the first interference margin report and the second interference margin report; and

negotiating with the second P2P device (304) to select the group owner based on the intent value.

2. The method of claim 1, wherein the determining the intent value comprises:

comparing the first interference margins with the second interference margins to determine an interference weight; and

adjusting the intent value based on the interference weight.

3. The method of claim 2, wherein the determining the intent value further comprises inspecting a tie-breaker bit when both devices detect the same intent value.

4. The method of claim 1, wherein the first interference margin report is a local interference margin report determined at the first P2P device, and the second interference margin report is a global interference margin report received from a second P2P device.

5. A first peer-to-peer, P2P, device (302) comprising:

means for determining (224) a first interference margin report (238) comprising a plurality of first interference margins, wherein the first interference margins respectively correspond to a plurality of first channels at a plurality of first bandwidths;

means for transmitting (210) the first interference margin report (238) to a second P2P device (304);

means for, prior to associating with the second P2P device (304) to form a P2P group, selecting (220) at least one of a bandwidth, a channel, or a group owner of the P2P group based on the first interference margin report;

means for receiving a second interference margin report from the second P2P device (304), wherein the second interference margin report comprises a plurality of second interference margins respectively corresponding to a plurality of second channels at a plurality of second bandwidths,

means for determining an intent value indicating a likelihood of the first P2P device (302) being the group owner based on the first interference margin report (238) and the second interference margin report; and

means for negotiating with the second P2P device (304) to select the group owner based on the intent value.

6. The first P2P device of claim 5, wherein the means for determining the intent value is configured to:

compare the first interference margins with the second interference margins to determine an interference weight; and

adjust the intent value based on the interference weight.

7. The first P2P device of claim 6, wherein the means for determining the intent value further comprises inspecting a tie-breaker bit when both devices detect the same intent value.

8. The first P2P device of claim 5, wherein the first interference margin report is a local interference margin report determined at the first P2P device, and the second interference margin report is a global interference margin report received from a second P2P device.

9. A computer program product comprising:

a computer-readable medium (206) comprising code for causing a first peer-to-peer, P2P, device (302) to:

determine a first interference margin report (238) comprising a plurality of first interference margins, wherein the first interference margins respectively correspond to a plurality of first channels at a plurality of first bandwidths;

transmit the first interference margin report (238) to a second P2P device (304);

prior to associating with the second P2P device (304) to form a P2P group, select at least one of a bandwidth, a channel, or a group owner of the P2P group based on the first interference margin report;

receive a second interference margin report from the second P2P device (304), wherein the second interference margin report comprises a plurality of second interference margins respectively corresponding to a plurality of second channels at a plurality of second bandwidths,

determine an intent value indicating a likelihood of the first P2P device (302) being the group owner based on the first interference margin report (238) and the second interference margin report; and

negotiate with the second P2P device (304) to select the group owner based on the intent value.

10. The computer program product of claim 9, wherein for determine the intent value, the computer-readable medium further comprises code for causing the first P2P device to:

compare the first interference margins with the second interference margins to determine an interference weight; and

adjust the intent value based on the interference weight.

**Peer-to-Peer Network**

FIG. 1

*FIG. 2*

19

**FIG. 3**

FIG. 4

500

Start

502 — Determine a first interference margin report including a plurality of first interference margins, wherein the first interference margins respectively correspond to a plurality of channels at a plurality of bandwidths

504 — Transmits the first interference margin report to a second P2P device

506 — Prior to associating with the second P2P device to form a P2P group, select at least one of a bandwidth, a channel, or a group owner of the P2P group based on the first interference margin report

End

*FIG. 5*

EP 3 297 253 A1

600

Start

602 — Determine an interference margin (IM) upper bound based on a target packet error rate (PER) corresponding to a data rate

604 — Determine the channels and bandwidths that have the interference margins equal to or less than the interference margin upper bound

606 — Determine the PERs of the channels and bandwidths based on their respective interference margins for different modulations

608 — Select the bandwidth that achieves the data rate with the simplest modulation based on the determined PERs

End

*FIG. 6*

*FIG. 7*

EP 3 297 253 A1

800

```
        ┌─────────────┐
        │    Start    │
        └──────┬──────┘
               │
               ▼
┌──────────────────────────────────────────────────┐
│ Determine one or more channels that can provide   │
│ the desired bandwidth                             │
└──────────────────────────────────────────────────┘
```

802

```
               │
               ▼
┌──────────────────────────────────────────────────┐
│ Determine the separation of the channels          │
└──────────────────────────────────────────────────┘
```

804

```
               │
               ▼
┌──────────────────────────────────────────────────┐
│ Select the channels with the minimum separation   │
└──────────────────────────────────────────────────┘
```

806

```
               │
               ▼
        ┌─────────────┐
        │     End     │
        └─────────────┘
```

**FIG. 8**

FIG. 9

1000

```
              ┌──────────────┐
              │    Start     │
              └──────┬───────┘
                     │
                     ▼
      ┌─────────────────────────────────────────┐
1002  │  Determine one or more channels that can │
      │         provide the desired bandwidth    │
      └──────────────────┬──────────────────────┘
                         │
                         ▼
      ┌─────────────────────────────────────────┐
1004  │  Determine the interference margins of   │
      │              the channels                │
      └──────────────────┬──────────────────────┘
                         │
                         ▼
      ┌─────────────────────────────────────────┐
1006  │  Select the channels with the minimum    │
      │         average interference margin      │
      └──────────────────┬──────────────────────┘
                         │
                         ▼
              ┌──────────────┐
              │     End      │
              └──────────────┘
```

**FIG. 10**

EP 3 297 253 A1

**FIG. 11**

EP 3 297 253 A1

1200

Start

1202 — At a first P2P device, determine and transmit a first interference margin report

1204 — Receive a second interference margin report from a second P2P device

1206 — Determine an intent value indicating a likelihood of the first P2P device being a group owner based on the first interference margin report and second interference margin report

1208 — Negotiate with the second P2P device to select the group owner based on the intent value

End

*FIG. 12*

*FIG. 13*

1400

1402 — Eliminate the bandwidth option(s) with interference margin(s) greater than the interference margin upper bound

1404 — For the remaining bandwidth option(s), the P2P device calculates the data rates for each valid modulation-code rate pair of the bandwidth option(s)

1406 — The P2P device eliminates the bandwidth options(s) that do not fulfill the data rate requirement. The data rate of the surviving bandwidth(s) is equal to or greater than the data rate requirement

More than one option?

Yes → 1408 — Select bandwidth based on max. data rate or mim. PER criterion

No → 1410 — Select bandwidth

FIG. 14

Europäisches
Patentamt

European
Patent Office

Office européen
des brevets

## EUROPEAN SEARCH REPORT

Application Number

EP 17 19 1644

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/005094 A1 (LEE SANG-MIN [KR] ET AL) 1 January 2009 (2009-01-01) * paragraphs [0058], [0059], [0102] - [0109] * | 1-10 | INV. H04L29/08 H04W72/04 H04L12/26 H04W52/02 H04W76/14 |
| A | US 2009/052319 A1 (MUQATTASH ALAA [US] ET AL) 26 February 2009 (2009-02-26) * paragraphs [0058], [0059], [0067], [0068] * | 1-10 | |
| A | WO 2013/025075 A2 (SAMSUNG ELECTRONICS CO LTD [KR]) 21 February 2013 (2013-02-21) * paragraph [0049] - paragraph [0052] * | 1-10 | |
| A | WO 2015/020375 A1 (LG ELECTRONICS INC [KR]) 12 February 2015 (2015-02-12) * paragraph [0124] - paragraph [0127] * | 1-10 | |

TECHNICAL FIELDS
SEARCHED (IPC)

H04W
H04L

The present search report has been drawn up for all claims

| Place of search | Date of completion of the search | Examiner |
|---|---|---|
| Munich | 9 February 2018 | Giglietto, Massimo |

EPO FORM 1503 03.82 (P04C01)

## ANNEX TO THE EUROPEAN SEARCH REPORT
## ON EUROPEAN PATENT APPLICATION NO.

EP 17 19 1644

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2018

| Patent document cited in search report | Publication date | Patent family member(s) | | Publication date |
|---|---|---|---|---|
| US 2009005094 A1 | 01-01-2009 | KR | 20080113837 A | 31-12-2008 |
| | | US | 2009005094 A1 | 01-01-2009 |
| | | WO | 2009002044 A2 | 31-12-2008 |
| US 2009052319 A1 | 26-02-2009 | CN | 101485158 A | 15-07-2009 |
| | | CN | 102316599 A | 11-01-2012 |
| | | EP | 2044739 A2 | 08-04-2009 |
| | | EP | 2081328 A2 | 22-07-2009 |
| | | JP | 5021737 B2 | 12-09-2012 |
| | | JP | 5579770 B2 | 27-08-2014 |
| | | JP | 2009543475 A | 03-12-2009 |
| | | JP | 2012178845 A | 13-09-2012 |
| | | KR | 20090035568 A | 09-04-2009 |
| | | KR | 20110128214 A | 28-11-2011 |
| | | KR | 20110128215 A | 28-11-2011 |
| | | KR | 20110135878 A | 19-12-2011 |
| | | TW | 200822636 A | 16-05-2008 |
| | | US | 2009052319 A1 | 26-02-2009 |
| | | WO | 2008005938 A2 | 10-01-2008 |
| WO 2013025075 A2 | 21-02-2013 | CN | 103891396 A | 25-06-2014 |
| | | EP | 2745618 A2 | 25-06-2014 |
| | | JP | 6104912 B2 | 29-03-2017 |
| | | JP | 2014522208 A | 28-08-2014 |
| | | KR | 20130019848 A | 27-02-2013 |
| | | US | 2013045678 A1 | 21-02-2013 |
| | | US | 2015244793 A1 | 27-08-2015 |
| | | WO | 2013025075 A2 | 21-02-2013 |
| WO 2015020375 A1 | 12-02-2015 | CN | 105409318 A | 16-03-2016 |
| | | CN | 105432108 A | 23-03-2016 |
| | | CN | 105453608 A | 30-03-2016 |
| | | CN | 105453631 A | 30-03-2016 |
| | | CN | 105453632 A | 30-03-2016 |
| | | CN | 105453688 A | 30-03-2016 |
| | | CN | 105557057 A | 04-05-2016 |
| | | EP | 3028484 A1 | 08-06-2016 |
| | | EP | 3028492 A1 | 08-06-2016 |
| | | EP | 3028493 A1 | 08-06-2016 |
| | | EP | 3028494 A1 | 08-06-2016 |
| | | EP | 3028525 A1 | 08-06-2016 |
| | | EP | 3028526 A1 | 08-06-2016 |
| | | EP | 3028527 A1 | 08-06-2016 |
| | | US | 2016165411 A1 | 09-06-2016 |
| | | US | 2016165414 A1 | 09-06-2016 |
| | | US | 2016165561 A1 | 09-06-2016 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 19 1644

This annex lists the patent family members relating to the patent documents cited in  the above-mentioned European search report.
The members are as contained in the European Patent Office EDP file on
The European Patent Office is in no way liable for these particulars which are merely given for the purpose of information.

09-02-2018

| Patent document cited in search report | Publication date | Patent family member(s) | Publication date |
|---|---|---|---|
| | | US 2016165658 A1 | 09-06-2016 |
| | | US 2016174276 A1 | 16-06-2016 |
| | | US 2016174284 A1 | 16-06-2016 |
| | | US 2016309284 A1 | 20-10-2016 |
| | | WO 2015020375 A1 | 12-02-2015 |
| | | WO 2015020379 A1 | 12-02-2015 |
| | | WO 2015020381 A1 | 12-02-2015 |
| | | WO 2015020383 A1 | 12-02-2015 |
| | | WO 2015020384 A1 | 12-02-2015 |
| | | WO 2015020385 A1 | 12-02-2015 |
| | | WO 2015020386 A1 | 12-02-2015 |

EPO FORM P0459

For more details about this annex : see Official Journal of the European Patent Office, No. 12/82

page 2 of 2

**EP 3 297 253 A1**

**Patent documents cited in the description**

- US 62148129 B
- US 14730433 B